# EUROPEAN PATENT APPLICATION

(11) **EP 2 525 254 A1**
(43) Date of publication of application: **21.11.2012**
(21) Application number: 10843098.4
(22) Date of filing: 22.10.2010
(51) Int. Cl.: G02F 1/1343

(54) **LIQUID CRYSTAL DISPLAY DEVICE**

(30) Priority: 14.01.2010 JP 2010006211
(71) Applicant: Sharp Kabushiki Kaisha, Osaka-shi, Osaka 545-8522 (JP)
(72) Inventor: MATSUMOTO, Toshihiro, Osaka-shi, Osaka 545 - 8522 (JP); MURATA, Mitsuhiro, Osaka-shi, Osaka 545-8522 (JP); KAWAHIRA, Yuichi, Osaka-shi, Osaka 545 - 8522 (JP)
(74) Representative: Müller - Hoffmann & Partner
(86) International application number: PCT/JP2010/068743
(87) International publication number: WO 2011/086743

(57) **Abstract**

The present invention provides a liquid crystal display device capable of enhancing the transmittance and the display quality. The liquid crystal display device includes a first substrate and a second substrate disposed to face each other, and a liquid crystal layer sandwiched between the first substrate and the second substrate, wherein the liquid crystal layer includes a liquid crystal molecule having positive dielectric anisotropy; the liquid crystal molecule is perpendicularly aligned relative to a surface of the first substrate when no voltage is applied; the first substrate includes a signal line, a scanning line, an insulating film, a first electrode to which an image signal is provided through the signal line, and a second electrode; the first electrode includes a first comb-tooth portion; the second electrode includes a second comb-tooth portion and a trunk portion connected to the second comb-tooth portion; the first comb-tooth portion and the second comb-tooth portion are planarly disposed to face each other in a pixel; the second substrate has a third electrode covering at least a display region; and the trunk portion is disposed in a manner overlapping the signal line and the scanning line at a position closer to the liquid crystal layer than the signal line and the scanning line with the insulating film sandwiched between the trunk portion and each of the lines.

## Description

### TECHNICAL FIELD

The present invention relates to a liquid crystal display device. More specifically, the present invention relates to a liquid crystal display device that adopts an oblique electric field system.

### BACKGROUND ART

Active matrix liquid crystal display devices that use an active element typified by a thin film transistor (TFT) are widely used as display devices because of the advantageous features such as thin profile, light weight, and high image quality comparable to a cathode-ray tube. The display systems of such active matrix liquid crystal display devices are broadly classified into the following two kinds of display systems.

The first kind is a vertical electric field system. According to this system, a liquid crystal layer is driven by an electric field in a direction approximately perpendicular to a substrate surface, and light that is incident on the liquid crystal layer is modulated and displayed. Conventionally known liquid crystal modes of vertical electric field system include TN (twisted nematic) mode and MVA (multi-domain vertical alignment) mode.

The other kind is a transverse electric field system. According to this system, a liquid crystal layer is driven by an electric field in a direction approximately parallel to a substrate surface. Conventionally known liquid crystal modes of transverse electric field system include IPS (in-plane switching) mode.

Another example of the known transverse electric field system is a display system that uses a p-type nematic liquid crystal as a liquid crystal material and regulates the alignment orientation of liquid crystal molecules by driving the liquid crystal by means of a transverse electric field using a pair of comb-shaped electrodes that are provided on one of a pair of substrates (see, for example, Patent Literature 1 and Patent Literature 2).

Moreover, as a display system other than the above systems, an oblique electric field system is known. According to this system, a liquid crystal layer is driven by an electric field in a direction oblique to a substrate surface. Specifically, for example, a liquid crystal display device is known which includes a pair of substrates, a liquid crystal enclosed between the pair of substrates, a plurality of stripe electrodes per pixel formed on one of the substrates, and a transparent electrode formed on the other substrate to cover substantially the whole of the substrate. In the liquid crystal device, the plurality of stripe electrodes include a first group of stripe electrodes and a second group of stripe electrodes, the first group of electrodes and the second group of electrode being in parallel to one another, the first group of stripe electrodes receiving a first voltage, the second group of stripe electrodes receiving a second voltage that is different from the first voltage (see, for example, Patent Literature 3).

### CITATION LIST

### Patent Literature

[Patent Literature 1] WO 09/139198
[Patent Literature 2] WO 09/139199
[Patent Literature 3] JP-A 2000-305100

### SUMMARY OF INVENTION

### Technical Problem

However, according to the technology in Patent Literature 3, alignment of liquid crystal molecules in the neighborhood of a signal line and a scanning line are disturbed in some cases due to influences of an electric field generated by the voltage applied to the signal line and the scanning line. In such cases, the alignment of the liquid crystal molecules is different from that of the liquid crystal molecules in the center portion of the pixel. Thus, uniform alignment of the liquid crystal molecules is not achieved in the entire pixel, causing reduction in the transmittance. Moreover, display defects such as screen burn-in and image sticking derived from the non-uniform alignment sometimes occur.

The present invention has been made in view of the above circumstances and an object of the present invention is to provide a liquid crystal display device capable of enhancing the transmittance and the display quality.

### Solution to Problem

The inventors of the present application have conducted various studies on liquid crystal display devices capable of enhancing the transmittance and the display quality, and have focused their attention on an electrode (second electrode) that is formed on the substrate having a signal line and a scanning line, and faces a pixel electrode (first electrode). As a result, they have found that the influence of an electric field generated by the signal line and the scanning line on liquid crystal molecules can be suppressed by disposing a part (trunk portion) of the second electrode in a manner overlapping the signal line and the scanning line at a position closer to a liquid crystal layer than the signal line and the scanning line with an insulating film sandwiched between the part (trunk portion) and each of the lines. Thereby, the alignment of the liquid crystal molecules in the neighborhood of the signal line and the scanning line can be prevented from being disturbed. Having realized that this idea can beautifully solve the above problem, the inventors have completed the present invention.

Specifically, the present invention provides a liquid crystal display device including a first substrate and a second substrate disposed to face each other, and a liquid crystal layer sandwiched between the first substrate and the second substrate, wherein the liquid crystal layer includes a liquid crystal molecule having positive dielectric anisotropy; the liquid crystal molecule is perpendicularly aligned relative to a surface of the first substrate when no voltage is applied; the first substrate includes a signal line, a scanning line, an insulating film, a first electrode to which an image signal is provided through the signal line, and a second electrode; the first electrode includes a first comb-tooth portion; the second electrode includes a second comb-tooth portion and a trunk portion connected to the second comb-tooth portion; the first comb-tooth portion and the second comb-tooth portion are planarly disposed to face each other in a pixel; the second substrate has a third electrode covering at least a display region; and the trunk portion is disposed in a manner overlapping the signal line and the scanning line at a position closer to the liquid crystal layer than the signal line and the scanning line with the insulating film sandwiched between the trunk portion and each of the lines.

Meanwhile, the term "perpendicularly aligned" used herein means that a pretilt angle is not necessarily exactly 90°, and the term may refer to substantially vertical alignment.

The display region includes a light-shielding region formed between pixels and/or in a pixel.

In the present invention, the pixel may be a picture element.

Moreover, in the present invention, the insulating film may be an interlayer insulating film.

The configuration of the liquid crystal display device of the present invention is not especially limited by other components as long as it essentially includes such components.
Preferable embodiments of the liquid crystal display device of the present invention are mentioned in more detail below. The following embodiments may be employed in combination.

The proportion of the part of the trunk portion overlapping the signal line and the scanning line may be set appropriately. However, an embodiment (hereinafter, also referred to as first embodiment) in which the trunk portion covers the signal line and the scanning line is preferable. This embodiment can prevent almost all the influence of the electric field generated by the signal line and the scanning line on the liquid crystal molecule. Moreover, although pixels are limited by the design and production process, this embodiment enables effective and efficient placement of the first electrode and the second electrode in a pixel.

In the first embodiment, the width (length in a direction perpendicular to the longitudinal direction of the trunk portion) of the part (part not overlapping the signal line and the scanning line) of the trunk portion protruded from the signal line and the scanning line may be 2 µm or more. This arrangement can practically achieve preferable transmittance.

The second electrode and the third electrode may be grounded. Voltages of the same magnitude and polarity (the same magnitude and the same polarity) or voltages of different magnitudes and polarities (magnitudes different from each other and the polarities different from each other) may be applied to the second electrode and the third electrode. In either case, the effect of the present invention can be exerted, while display with liquid crystal is affordable.

Preferably, the second substrate further includes a color filter layer and a dielectric layer disposed at a position closer to the liquid crystal layer than the color filter, and the third electrode is disposed between the color filter layer and the dielectric layer. Providing the dielectric layer on a liquid crystal layer side of the third electrode as mentioned earlier can enhance the transmittance of the entire pixel. Moreover, by providing the third electrode and the dielectric layer on a liquid crystal side (between the color filter layer and the liquid crystal layer) of the color filter layer, impurities from the color filter layer can be prevented from being eluted to the liquid crystal layer. This arrangement improves credibility.

### Advantageous Effects of Invention

The liquid crystal display device of the present invention can enhance the transmittance. Moreover, since screen burn-in and image sticking are less likely to occur in the liquid crystal display device of the present invention, the display quality can be enhanced.

### BRIEF DESCRIPTION OF DRAWINGS

Fig. 1 is a planar schematic view showing a liquid crystal display device according to Embodiment 1.
Fig. 2 is an A-B line cross-sectional view of Fig. 1.
Fig. 3 is a C-D line cross-sectional view of Fig. 1
Fig. 4 is a cross-sectional view showing the liquid crystal display device according to Embodiment 1 which is a model used for simulation.
Fig. 5 shows the transmittance of the liquid crystal display device according to Embodiment 1 that is obtained by simulation.
Fig. 6 is a cross-sectional view showing a liquid crystal display device according to Comparative Example 1

### DESCRIPTION OF EMBODIMENT

The present invention will be mentioned in more detail referring to the drawings in the following embodiments, but is not limited to these embodiments.

In the embodiments below, the 3 o'clock direction, the 12 o'clock direction, the 9 o'clock direction and the 6 o'clock direction denote respectively a 0° direction (orientation), a 90° direction (orientation), a 180° direction (orientation) and a 270° direction (orientation); while the direction running through 3 o'clock and 9 o'clock is a left-right direction and the direction running through 12 o'clock to 6 o'clock is a top-down direction, in a front view of the liquid crystal display device, i.e. in a front view of surfaces of the active matrix substrate and the counter substrate.

Further, in the drawings below, although one picture element (subpixel) is shown, a plurality of pixels are provided in a matrix shape in a display region (region to display images) of the liquid crystal display device of each embodiment. Each pixel consists of a plurality (normally three pieces) of picture elements.

### (Embodiment 1)

A liquid crystal display device according to the present embodiment displays image by generating an electric field in a direction oblique to a substrate surface so that the alignment of the liquid crystal molecules is controlled by the electric field.

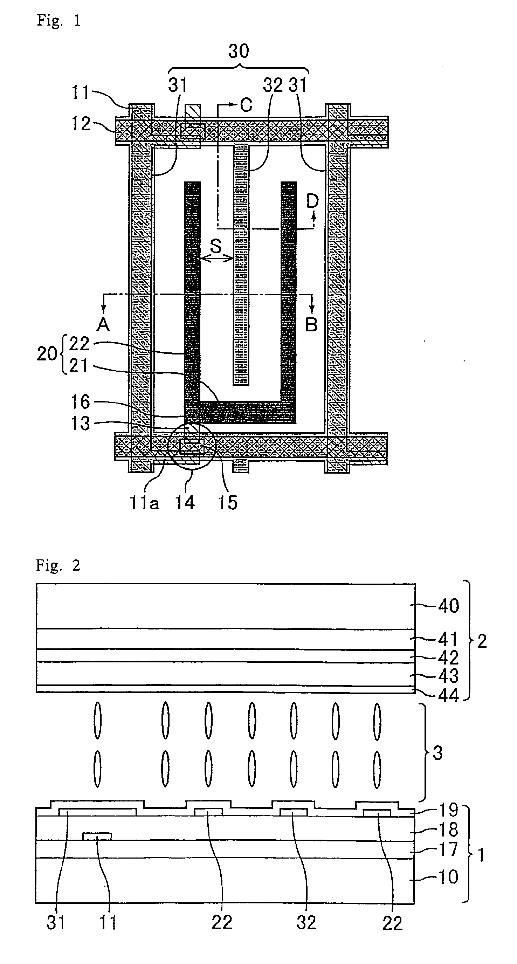

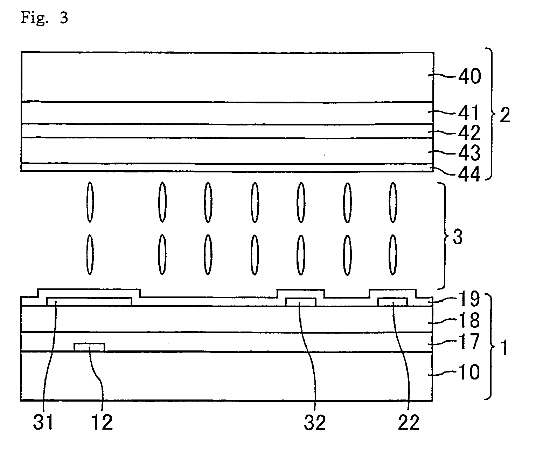

The liquid crystal display device of the present embodiment includes a liquid crystal display panel. As shown in Figs. 2 and 3, the liquid crystal display panel has an active matrix substrate (TFT array substrate) 1 and an counter substrate 2 that are a pair of substrates disposed to face each other, and a liquid crystal layer 3 sandwiched between the substrates 1 and 2. The substrate 1 is disposed at a back side of the liquid crystal display device, and the substrate 2 is disposed at an observation side of the liquid crystal display device.

A pair of linear polarizers (not shown) are provided at the opposite sides to the liquid crystal layer 3 of the substrates 1 and 2. The pair of linear polarizers are disposed in a cross-Nichol arrangement. An absorption axis of one of the pair of linear polarizers is arranged in an angle of 45°, and an absorption axis of the other of the pair of linear polarizers is arranged in an angle of 135°. An optical film such as a retardation film may be provided at least one of a position between the substrate 1 and one of the polarizers and a position between the substrate 2 and the other polarizer.

The substrates 1 and 2 are attached to each other with a sealing material provided so as to surround the display region. The substrates 1 and 2 are disposed to face each other through spacers such as plastic beads. The liquid crystal layer 3 is formed by filling a liquid crystal material as a display medium constituting an optical modulation layer in the gap between the substrates 1 and 2. Vertical alignment films 19 and 44 are respectively provided on the surfaces on the liquid crystal layer 3 sides of the substrates 1 and 2.

The liquid crystal layer 3 includes a nematic liquid crystal material that has positive dielectric anisotropy. Liquid crystal molecules (hereinafter, also referred to simply as nematic liquid crystal) of the material exhibit a homeotropic alignment when no voltage is applied thereto (when no electric field is generated by the three electrodes described later) under the effect of an alignment regulating force of the vertical alignment films 19 and 44.

Thus, since the liquid crystal display panel of the present embodiment has a pair of polarizers that are disposed in a cross-Nichol arrangement and the vertical-alignment type liquid crystal layer 3 as well, the liquid crystal display panel is of a normally black mode.

The vertical alignment films 19 and 44 are formed by coating of a known alignment film material such as polyimide. Although the vertical alignment films 19 and 44 are normally not subjected to a rubbing treatment, the vertical alignment films can align nematic liquid crystal in substantially a perpendicular direction relative to the film surface when no voltage is applied.

Panel retardation dΔn (the product of a cell thickness d and a birefringence index Δn of the liquid crystal material) is 280 to 450 nm (preferably 300 to 360 nm). The panel retardation dΔn of more than 450 nm may decrease the transmittance. The panel retardation dΔn of less than 280 nm may deteriorate the viewing angle characteristics.

The counter substrate 2 includes a colorless transparent insulating substrate 40 formed from glass, plastic, or the like. On a main surface on the liquid crystal layer 3 side of the insulating substrate 40, a color filter layer 41, a solid electrode 42 (counter electrode corresponding to the third electrode), a dielectric layer (insulating layer) 43, and the vertical alignment film 44 are formed in the stated order.

The color filter layer 41 includes a plurality of color layers (color filters) provided corresponding to respective picture elements. The color layers are used for color image display, and are formed of a transparent organic insulating film or the like such as an acrylic resin that contains a pigment, and are mainly formed on picture element regions. This configuration enables color display. Each pixel is constituted by three picture elements that respectively output colored light of R (red), G (green) and B (blue). Note that the types and number of colors of the picture elements constituting each pixel are not particularly limited, and may be set appropriately. Namely, each pixel may be constituted, for example, by picture elements of three colors such as cyan, magenta, and yellow, or may be constituted by picture elements of four or more colors.

The color filter layer 41 may further include a black matrix (BM) layer which blocks light between each of the picture elements. The BM layer may be formed of an opaque metal films of chrome or the like, or an opaque organic film of acrylic resin containing carbon, or the like. The BM layer is formed in a region corresponding to a boundary region of adjacent picture elements.

The solid electrode 42 is formed of a transparent conductive film such as an ITO film and an IZO film. The solid electrode 42, the dielectric layer 43, and the vertical alignment film 44 are formed without breaks so as to cover at least the entire display region. A predetermined potential shared by the picture elements is applied to the solid electrode 42.

The dielectric layer 43 is formed from a transparent insulating material. More specifically, the dielectric layer 42 is formed of an inorganic insulating film such as a silicon nitride film, or from an organic insulating film such as an acrylic resin film, or the like.

The film thickness of the dielectric layer 43 formed from an organic material is approximately 1.0 to 3.0 µm.

By providing the solid electrode 42 and the dielectric layer 43 both at positions closer to the liquid crystal layer 3 side than the color filter layer 41, impurities from the color filter layer 41 can be prevented from being eluted to the liquid crystal layer 3. This arrangement improves credibility. Furthermore, display having high contrast characteristics and little image roughness can be obtained. If irregularity exists in the boundary between the counter substrate 2 and the liquid crystal layer 3, the irregularity disturbs the electric field. Thus, the alignment of the nematic liquid crystal is disturbed, resulting in formation of unwanted domains. Moreover, if irregularity exists, the nematic liquid crystal are not perpendicularly aligned at the irregular part when no voltage is applied (during black display), and as a result, the contrast characteristic is deteriorated.

The active matrix substrate 1 includes a colorless transparent insulating substrate 10 formed from glass, plastic, or the like. As shown in Fig. 1, on a main surface on the liquid crystal layer 3 side of the insulating substrate 10, a plurality of signal lines (source bus lines) 11, a plurality of scanning lines (gate bus lines) 12, a plurality of storage capacitor lines (not shown), a plurality of thin film transistors (TFTs) 14, a plurality of pixel electrodes 20 (corresponding to the first electrodes) individually provided to each picture element, and a common electrode 30 (corresponding to the second electrode) which is provided in common with the plurality of picture elements (for example, all picture elements) are provided. The TFTs 14 are switching elements (active elements) and are provided individually for each picture element.

With respect to a cross-sectional structure of the substrate 1, the scanning lines 12 and the storage capacitor lines are provided on the insulating substrate 10. A gate insulating film 17 is provided on the scanning lines 12 and the storage capacitor lines. The signal lines 11 are provided on the gate insulating film 17. An interlayer insulating film 18 is provided on the signal lines 11. The electrodes 20 and 30 are provided on the interlayer insulating film 18. The vertical alignment film 19 is provided on the electrodes 20 and 30.

The scanning lines 12 and the storage capacitor lines are formed of metal films having high melting points such as molybdenum films and tantalum films. The gate insulating film 17 is formed of a transparent inorganic insulating film such as a silicon oxide film and a silicon nitride film. The signal lines 11 are formed of a low resistance metal film such as an aluminum film. The interlayer insulating film 18 is formed from transparent insulation materials, specifically, formed of an inorganic insulating film such as a silicon oxide film and a silicon nitride film; a transparent organic insulating film such as an acrylic resin film; or the like. The interlayer insulating film 18 may include a plurality of layers respectively formed from different materials from one another, or may be a laminate of an inorganic insulating film and an organic insulating film. The electrodes 20 and 30 are formed of transparent conductive films such as ITO films and IZO films; metal films such as aluminum films and chrome films; or the like.

The signal lines 11 are disposed linearly in parallel with one another, and extend in a top-down direction between adjacent picture elements. The scanning lines 12 are disposed linearly in parallel with one another, and extend in a left-right direction between adjacent picture elements. The signal lines 11 and the scanning lines 12 are orthogonally crossed each other. Each of regions separated by the signal lines 11 and the scanning lines 12 forms an approximately single picture element region. The signal lines 11 are connected to a source driver at an outside of the display region. The scanning lines 12 are connected to a gate driver at an outside of the display region while functioning as a gate of the TFTs 14 in the display region. Moreover, pulsed scanning signals are supplied at a predetermined timing from the gate driver to the scanning lines 12. The scanning signals are applied to the TFTs 14 by a line sequential system.

The TFTs 14 are provided in the neighborhoods of the signal lines 11 and the scanning lines 12. Each of the TFTs 14 includes a semiconductor layer 15 formed in an island shape on the scanning line 12 and also includes a source electrode 11a functioning as a source and a drain electrode 13 functioning as a drain. The source electrode 11a connects the TFT 14 and the signal line 11. The drain electrode 13 connects the TFT 14 and the picture electrode 20. The source electrode 11a and the signal lines 11 are formed of the same film by patterning, and thus are connected to each other. The drain electrode 13 is provided on the gate insulating film 17 in the same manner as the source electrode 11a and the signal lines 11, and is connected to the pixel electrode 20 through a contact hole 16 provided in the interlayer insulating film 18.

The TFTs 14 enter an on state for only a fixed time period upon input of a scanning signal, and while the TFTs 14 are an on state, an image signal is supplied from the signal lines 11 at a predetermined timing to the pixel electrodes 20. Thereby, the image signal is written in the liquid crystal layer 3. Meanwhile, a predetermined potential that is common to the picture elements is applied to the common electrode 30.

After being written to the liquid crystal layer 3, the image signal is retained for a fixed time period between the pixel electrode 20 to which the image signal is supplied and the common electrode 30 facing the pixel electrode 20 and between the pixel electrode 20 and the solid electrode 42 facing the pixel electrodes 20. That is, a capacitance (liquid crystal capacitance) is formed for a fixed time period between the pixel electrodes. In order to prevent leakage of the retained image signal, a storage capacitance is formed in parallel with the liquid crystal capacitance. The storage capacitance is formed in a picture element between an electrode (not shown) connected to the drain electrode 13 and the storage capacitor line. The storage capacitor line is formed in parallel with the scanning line 12.

Except for the time period of black display, the voltage applied to the pixel electrode 20 is different from the voltage applied to the common electrode 30 and the voltage applied to the solid electrode 42.

The pixel electrode 20 has a comb shape in a plan view and includes a linear trunk portion (pixel trunk portion 21) and a plurality of linear comb-tooth portions (pixel comb-tooth portions 22). The pixel trunk portion 21 is provided along a shorter side (bottom side) of the picture element. The pixel comb-tooth portions 22 are connected to the pixel trunk portion 21, and thereby they are connected to one another. Each of the comb-tooth portions 22 extends from the pixel trunk portion 21 towards a shorter side (upper side) of the picture element that faces the pixel trunk portion 21, namely extends in an angle of substantially 90°. The pixel trunk portion 21 and the pixel comb-tooth portions 22 are formed of the same film by patterning, and thus are connected to one another.

The common electrode 30 includes a comb shape in a plan view, and has a trunk portion (common trunk portion 31) with a lattice shape in a plan view and a plurality of linear comb-tooth portions (common comb-tooth portions 32). The common trunk portion 31 is formed in top-down and left-right directions to overlap the scanning lines 12 and the signal lines 11. Preferably, the common trunk portion 31 fully covers the scanning lines 12 and the signal lines 11. Each of the common comb-tooth portions 32 extends from a part of the common trunk portion 31 at an upper side of the picture element towards the opposite lower side, namely, in a direction in an angle of substantially 270°. The common trunk portion 31 and the common comb-tooth portions 32 are formed of the same film by patterning, and thus are connected one another.

Accordingly, the pixel electrode 20 and the common electrode 30 are disposed to face each other with the comb-tooth portions (pixel comb-tooth portions 22, common comb-tooth portions 32) of the respective electrodes engaging with each other. The pixel comb-tooth portions 22 and the common comb-tooth portions 32 are alternately disposed in parallel with each other with a spacing in between. Moreover, the pixel comb-tooth portions 22 are disposed in parallel with the parts of the common trunk portion 31 that overlap the signal lines 11.

The widths (minimum width) of the pixel comb-tooth portions 22 and the common comb-tooth portions 32 are not particularly limited, and each width may be set appropriately.

The length of the spacing between the pixel electrode 20 and the common electrode 30 is not particularly limited, and each length of the spacing may be set appropriately. Meanwhile, the spacing between the pixel electrode 20 and the common electrode 30 herein is a spacing (hereinafter also referred simply to as electrode spacing S) between the pixel electrode 20 and the common electrode 30, specifically a spacing between the pixel comb-tooth portion 22 and the common comb-tooth portion 32 in a widthwise direction (direction perpendicular to the longitudinal direction).

In the present embodiment mentioned earlier, when a voltage is applied, an oblique electric field (electric field that is oblique to the main surfaces of the substrates 1 and 2) is generated from the pixel electrode 20 towards the solid electrode 42. Moreover, a transverse electric field (electric field that is parallel to the main surfaces of the substrates 1 and 2) is generated from the pixel electrode 20 towards the common electrode 30. The transverse electric field functions to facilitate generation of the oblique electric field. Due to the presence of the transverse electric field, the oblique electric field is not so much weakened even at a position away from the pixel electrode 20. Therefore, the nematic liquid crystal that has been perpendicularly aligned when no voltage has been applied is aligned in parallel with the oblique electric field when a voltage is applied.

In the case where the solid electrode 42 is adjacent to the vertical alignment film 44, equipotential lines are concentrated in a neighborhood of the boundary of the counter substrate 2 and the liquid crystal layer 3. For this reason, a component in a normal direction of the oblique electric field becomes strong in the liquid crystal layer 3. As a result, the nematic liquid crystal is not laid sufficiently in some cases. In contrast, in the present embodiment, since the dielectric layer 43 is provided on the liquid crystal layer 3 side of the solid electrode 42, it is possible to prevent the equipotential lines from being concentrated in a neighborhood of the boundary of the counter substrate 2 and the liquid crystal layer 3. Thus, the component in a normal direction of the oblique electric field in the liquid crystal layer 3 can be weakened. As a result, the nematic liquid crystal can be laid sufficiently, leading to enhancement of the transmittance of the entire picture element.

In the present embodiment, the common trunk portion 31 is disposed at a position closer to the liquid crystal layer 3 than the scanning lines 12 with the interlayer insulating film 18 sandwiched in between and also at a position closer to the liquid crystal layer 3 than the signal lines 11 with the gate insulating film 17 and the interlayer insulating film 18 sandwiched in between. Moreover, the common trunk portion 31 overlaps the signal lines 11 and the scanning lines 12. Therefore, an electric field generated by the signal lines 11 and the scanning lines 12 can be blocked by the common trunk portion 31. That is, since it is possible to prevent the electric field from affecting the nematic liquid crystal, disturbance in the alignment of the nematic liquid crystal in the neighborhoods of the signal lines 11 and the scanning lines 12 can be avoided. As a result, reduction in the transmittance can be suppressed. Moreover, display defects such as screen burn-in and image sticking derived from the non-uniform alignment can be prevented from occurring.

The common electrode 30 and the solid electrode 42 may be grounded. Voltages of the same magnitude and polarity, or voltages of different magnitudes and polarities may be applied to the common electrode 30 and the solid electrode 42. In either case, the transmittance and the display quality can be enhanced, while achieving the display of the display system according to the present embodiment.

In the present embodiment, since the trunk portion 31 covers the signal lines 11 and the scanning lines 12, almost all influence of the electric field generated by the signal lines 11 and the scanning lines 12 on the nematic liquid crystal can be avoided. Moreover, the region between the common trunk portion 31 and the pixel comb-tooth portion 22, namely an edge portion of the picture element, can be used for display. Therefore, the pixel electrode 20 and the common electrode 30 can be efficiently and effectively arranged in the picture element, which further enhances the transmittance. Moreover, in the present embodiment, if the trunk portion 31 is formed from an opaque material, the common trunk portion 31 can efficiently block light between the picture elements. It is thus not necessary to form a black matrix (BM) layer in the counter substrate 2.

The pixel electrode 20 and the common electrode 30 are formed by photolithography by patterning the same film in the same process, and are disposed on the same layer (same insulation layer).

The number of the pixel comb-tooth portions 22 and the number of the common comb-tooth portions 32 are not particularly limited as long as each of the pixel comb-tooth portions 22 and each of the common comb-tooth portions 32 are alternately disposed in a picture element, and the numbers may be set appropriately.

In the embodiment shown in Fig. 1, two domains in which the tilt direction of the nematic liquid crystal is opposite to each other are formed in a picture element. The number of the domains is not particularly limited, and may be set appropriately. In terms of achieving good viewing angle characteristics, four domains may be formed in a picture element.

Moreover, two or more regions having different electrode spacing S from one another may be formed in a picture element. For example, a region having a relatively narrow electrode spacing (spacing Sn region) and a region having a relatively wide electrode spacing (spacing Sw region) may be formed in a picture element. This arrangement allows each of the regions to have a different threshold of the VT characteristic from one another. Therefore, the angle of the VT characteristic (VT curve) of the entire picture element can be smoothed especially at low gradation. As a result, occurrence of white floating is reduced, and the viewing angle characteristics can be enhanced. Meanwhile, the white floating refers to a phenomenon that, when a relatively dark image in low gradation is displayed and the viewing direction is obliquely inclined from the front, the image that should be seen dark appears whitish. Meanwhile, the lengths of the spacings Sn and Sw are not particularly limited, and each length may be set appropriately.

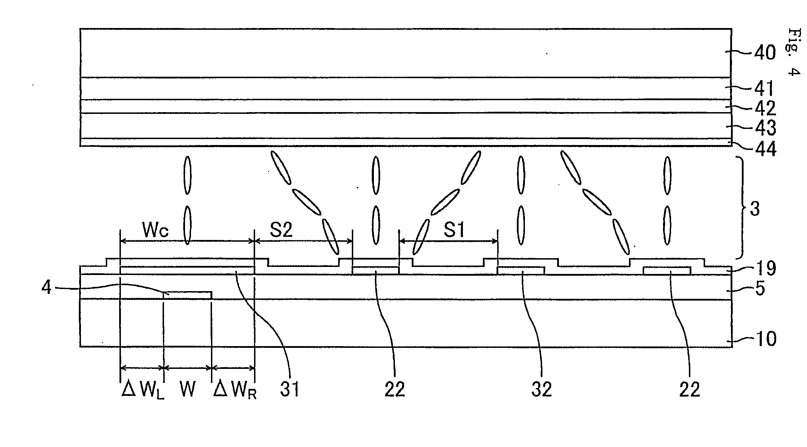

An explanation follows below on simulation results of the alignment and transmittance of the nematic liquid crystal between the common trunk portion 31 and the pixel comb-tooth portion 22. The model shown in Fig. 4 was used for the simulation, and LCD MASTER available from Shintech, Inc. was used as a simulator. The simulation was performed in several cases in which the width of the portion of the common trunk portion 31 protruded from the signal line 11 and the scanning line 12 was different from one another.

The model shown in Fig. 4 includes a pair of substrates, and a liquid crystal layer 3 sandwiched between the pair of substrates. One of the substrates has an insulating substrate 10, a wiring 4 formed on the insulating substrate 10, an insulating film 5 formed on the wiring 4, a pixel electrode 20 and a common electrode 30 (pixel comb-tooth portion 22, common trunk portion 31 and common comb-tooth portion 32) formed on the insulating film 5, and a vertical alignment film 19 formed on the electrodes 20 and 30. The wiring 4 corresponds to a signal line or a scanning line. The wiring 4, the pixel comb-tooth portion 22, the common trunk portion 31 and the common comb-tooth portion 32 are disposed in parallel with one another.

The other substrate has an insulating substrate 40, a color filter layer 41 formed on the insulating substrate 40, a solid electrode 42 formed on the color filter layer 41, a dielectric layer 43 formed on the solid substrate 42, and a vertical alignment film 44 formed on the dielectric layer 43.

The other simulation conditions are as follows:
● Spacing S1 between the pixel comb-tooth portion 22 and the common comb-tooth portion 32: 8 µm
● Spacing S2 between the common trunk portion 31 and the pixel comb-tooth portion 22: 8 µm
o Voltage of the pixel electrode 20: AC (alternating current) voltage is applied (amplitude: 5.5 V); provided that the Vc (potential at the amplitude center) is set to the same potential as the potential of the common electrode 30
● Voltage of the common electrode 30: DC (direct current) voltage of 0 V is applied.
● Voltage of the solid electrode 42: DC (direct current) voltage of 0 V is applied.
● Voltage of the wiring 4: AC (alternating current) voltage is applied (amplitude: 5.5 V)
● Width W of the wiring 4: 12 µm
● dΔn: 340 nm
● Δε: 22
● Film thickness of the insulating film 5: 3 µm
● Dielectric constant ε of the insulating film 5: 3.3
The widths ΔW_{R} and ΔW_{L} of the portions of the common trunk portion 31 protruded from both sides of the wiring 4 are set to the same value. The width of the common trunk portion 31 was set W_{c}.

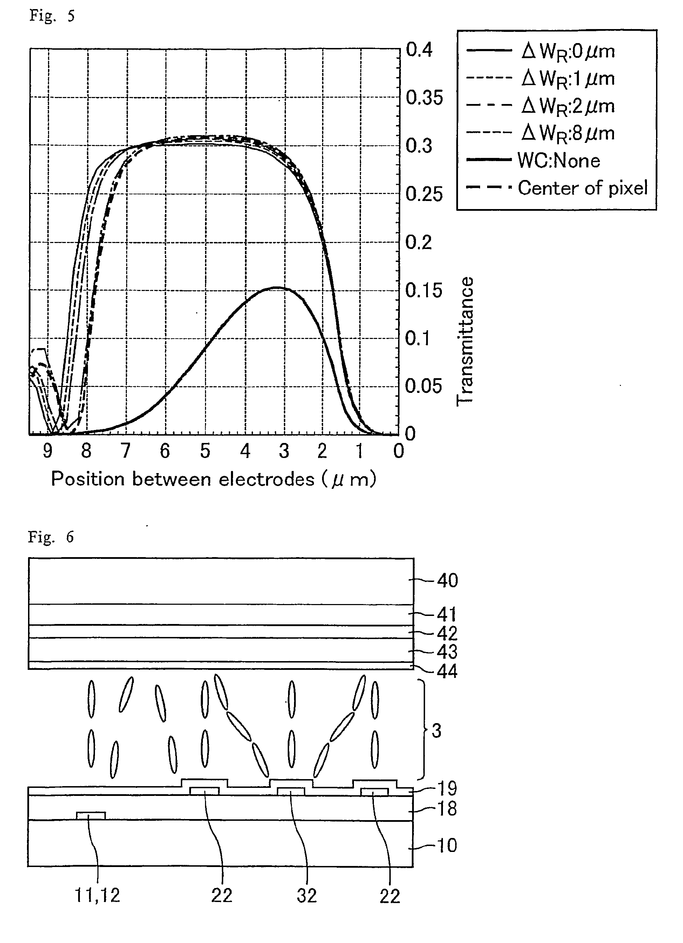

Fig. 5 shows the results. Fig. 5 shows the transmittance of Comparative Embodiment in which no common trunk portion 31 was formed on the wiring 4 (W_{c}: none), and the transmittance of the portion between the pixel comb-tooth portion 22 and the common comb-tooth portion 32, i.e., the center portion of the pixel. Meanwhile, the horizontal axis of Fig. 5 indicates the position between the electrodes, in which the pixel comb-tooth portion 22 is at right side of the value 1 on the scale, and the common trunk portion 31 or the wiring 4 is at the left side of the value 8 on the scale.

The results show that the transmittance is dramatically increased by forming the common trunk portion 31 on the wiring 4 that corresponds to a signal line and a scanning line. In the case where the width ΔW_{R} was 8 µm, the transmittance distribution was the same as that of the center portion of the pixel. However, setting the width ΔW_{R} to be 8 µm causes a large loss in the aperture ratio. In other words, the comb-tooth portions are not effectively and efficiently disposed in the limited picture element region in some cases. Considering the restrictions on the production process and design, the width ΔW_{R} is preferably not less than 2 µm. Although the width ΔW_{R} and the width ΔW_{L} were set to the same value in the above calculation, the width ΔW_{R} and the width ΔW_{L} may be different. Namely, the common trunk portion may be asymmetrically protruded from both sides of the signal line and the scanning line.

### (Comparative Embodiment 1)

As shown in Fig. 6, in the liquid crystal display device of Comparative Embodiment 1, no common electrode is formed between the signal line 11 and the scanning line 12, and the liquid crystal layer 3. Therefore, liquid crystal molecules in the neighborhoods of the signal line 11 and the scanning line 12 may be disturbed by an influence of the electric field generated by the voltage applied to the signal line 11 and the scanning line 12. In this case, the liquid crystal molecules align not in the same manner as the liquid crystal molecules at the center portion of the pixel, and thus uniform alignment of the liquid crystal molecules is not achieved in the entire pixel. As a result, the transmittance may be deteriorated, and further, display defects such as screen burn-in and image sticking may occur due to the non-uniform alignment.

The present application claims priority to Patent Application No. 2010-6211 filed in Japan on January 14, 2010 under the Paris Convention and provisions of national law in a designated State, the entire contents of which are hereby incorporated by reference.

### REFERENCE SIGNS LIST

- 1:: Active matrix substrate
- 2:: Counter substrate
- 3:: Liquid crystal layer
- 4:: Line
- 5:: Insulating film
- 10, 40:: Insulating substrate
- 11:: Signal line
- 11a:: Source electrode
- 12:: Scanning line
- 13:: Drain electrode
- 14:: TFT
- 15:: Semiconductor layer
- 16:: Contact hole
- 17:: Gate insulating film
- 18:: Interlayer insulating film
- 19, 44:: Vertical alignment film
- 20:: Pixel electrode
- 21:: Pixel trunk portion
- 22:: Pixel comb-tooth portion
- 30:: Common electrode
- 31:: Common trunk portion
- 32:: Common comb-tooth portion
- 41:: Color filter layer
- 42:: Solid electrode
- 43:: Dielectric layer

## Claims

1. A liquid crystal display device comprising
a first substrate and a second substrate disposed to face each other, and
a liquid crystal layer sandwiched between the first substrate and the second substrate, wherein
the liquid crystal layer includes a liquid crystal molecule having positive dielectric anisotropy;
the liquid crystal molecule is perpendicularly aligned relative to a surface of the first substrate when no voltage is applied;
the first substrate includes a signal line, a scanning line, an insulating film, a first electrode to which an image signal is provided through the signal line, and a second electrode;
the first electrode includes a first comb-tooth portion;
the second electrode includes a second comb-tooth portion and a trunk portion connected to the second comb-tooth portion;
the first comb-tooth portion and the second comb-tooth portion are planarly disposed to face each other in a pixel;
the second substrate includes a third electrode covering at least a display region; and
the trunk portion is disposed in a manner overlapping the signal line and the scanning line at a position closer to the liquid crystal layer than the signal line and the scanning line with the insulating film sandwiched between the trunk portion and each of the lines.

2. The liquid crystal display device according to Claim 1, wherein
the trunk portion covers the signal line and the scanning line.

3. The liquid crystal display device according to Claim 2, wherein
a width of a part of the trunk portion protruded from the signal line and the scanning line is 2 µm or more.

4. The liquid crystal display device according to any one of Claims 1 to 3, wherein
the second electrode and the third electrode are grounded.

5. The liquid crystal display device according to any one of Claims 1 to 3, wherein
voltages of the same magnitude and polarity are applied to the second electrode and the third electrode.

6. The liquid crystal display device according to any one of Claims 1 to 3, wherein
voltages of different magnitudes and polarities are applied to the second electrode and the third electrode.

7. The liquid crystal display device according to any one of Claims 1 to 6, wherein
the second substrate further comprises a color filter layer and a dielectric layer disposed at a position closer to the liquid crystal layer than the color filter, and
the third electrode is disposed between the color filter layer and the dielectric layer.
